Europäisches Patentamt

European Patent Office

Office européen des brevets

(11) Publication number: **0 112 765**
A1

# EUROPEAN PATENT APPLICATION

(21) Application number: 83402428.3

(22) Date of filing: 15.12.83

(51) Int. Cl.³: **F 16 K 31/363**, G 05 D 16/10, A 62 B 9/02

(30) Priority: 20.12.82 US 451641

(43) Date of publication of application: 04.07.84 Bulletin 84/27

(84) Designated Contracting States: DE FR GB

(71) Applicant: THE BENDIX CORPORATION, Executive Offices Bendix Center, Southfield Michigan 48037 (US)

(72) Inventor: Gray, Robert Elder, 1907 Oro Court, Clearwater Florida 33516 (US)
Inventor: Staelens, Philip Clifford, 6299 Cedarbrook Dr. S., Pinellas Park Florida 33565 (US)

(74) Representative: Müller, Frithjof E. et al, Patentanwälte Dipl.-Chem. Dr. N. ter Meer Dipl.-Ing. F.E. Müller Dipl.-Ing. H. Steinmeister Triftstrasse 4, D-8000 München 22 (DE)

(54) **Combined pressure-reducing regulator and shutt-off valve.**

(57) A combined pressure-reducing regulator and shut-off valve comprising a piston rod (30) slidably received in a bore (22) and a piston (28) (carried by the rod) slidably received in a communicating counterbore (23), a precision spring (40) seated within the counterbore and exerting a constant bias force on the piston, and passageways (33, 34, 35) within the piston and piston rod which communicate the high-pressure air supply with the end face of the piston.

According to this invention, there is provided a screw-threaded sleeve (45) which may be advanced axially in the housing [by means of a control knob subassembly (54, 56)] to engage the end face of the piston, thereby moving the piston and piston rod for closing off the high-pressure supply; this sleeve is normally disassociated from the spring over the regulating cycle of the valve.

For use particularly in self-contained breathing apparatus.

## COMBINED PRESSURE-REDUCING REGULATOR
## AND SHUT-OFF VALVE

The present invention relates to a combined regulator and control valve, and more particularly, to a combined pressure-reducing regulator and shut-off valve intended for pneumatic systems.

A combined pressure-reducing regulator and control valve is commonly used in pneumatic systems which utilize a cylinder of compressed gas, such as a self-contained breathing apparatus (or "SCBA"). The supply pressure from the high-pressure air cylinder will vary as the cylinder is depleted from "full" to "empty". Accordingly, the purpose of the pressure-reducing regulator is to provide a substantially--constant relatively-low output pressure from the variable supply pressure of the cylinder throughout its operating range. Additionally, the breathing apparatus (or other pneumatic system) will be provided with a manual control valve to open or close the air supply; this valve is separate from the regulating structure.

In the prior art, as exemplified by United States Letters Patent No. 2 053 611 issued on September 8, 1936, the pressure reducer classically operates by equallizing the forces produced by pressures acting upon respective areas. The reduced pressure acting on one surface area must equal the supply pressure acting on a second surface area to accomplish the reduced pressure effect. If a precise control of reduced pressure is desired over the pressure range of the air supply, it is accomplished by: first, adding a spring force to the system, opposing the force created by reduced pressure; and second, making the surface area upon which reduced pressure acts many times greater than the area upon which supply pressure acts. As a result, variations in the supply pressure are substantially negated by the opposing spring force and by the reduced pressure force. To accomplish such an effect requires a relatively large surface area for reduced pressure to act upon, as well as a strong opposing spring, which results in a large and relatively-heavy pressure reducer.

As further exemplified by the aforesaid United States Letters Patent No. 2 053 611, the prior art designs also utilize an adjusting screw (or its equivalent) which is actuated by a control knob to vary the bias force of the spring. The reduced pressure varies according to how far the adjusting screw is backed out, and thus a precise regulated output pressure is difficult to obtain.

Accordingly, it is an object of the present invention to alleviate the disadvantages and deficiencies of the prior art by providing a combined pressure-reducing regulator and shut-off valve which is relatively small, lightweight and economical to produce.

It is another object of the present invention to provide a substantially-constant spring force which is not affected by the position of the control knob, thereby providing a precise reduced regulated output pressure over the operating range of the system.

In accordance with the teachings of the present invention, the combined pressure-reducing regulator and shut-off valve comprises a housing having a bore and further having a communicating counterbore of greater diameter formed therein, a piston slidably received in the counterbore and having an end face confronting the closed end of the counterbore, the piston further having a piston rod slidably received in the bore, the housing having high-pressure inlet means and low-pressure outlet means, respectively, in communication with the bore, a spring in the counterbore and seated axially between the piston and the housing, and passageway means communicating the bore with the opposite end of the counterbore, whereby pressure on the end face of the piston counteracts the force of the spring to regulate the flow through the low-pressure outlet means, characterized by a movable member mounted within the housing beyond the end of the counterbore and normally out of engagement with the end face of the piston, whereby the spring biases the piston independently of the movable member, and manual means for selectively moving the movable member into engagement with the end face of the piston and against the force of the spring, thereby advancing the piston and piston rod to close off the high-pressure inlet means.

In accordance with the further teachings of the present invention, the passageway means is formed within the piston and piston rod. The end face of the piston carries a sealing washer, which extends to the circumference of the piston, and which has a plurality of slots formed therein to communicate with the counterbore and expose a desired surface area of the piston.

In accordance with the still further teachings of the present invention, the screw-threaded member comprises an externally-threaded sleeve; and a stem has an integral tang portion received within the sleeve and keyed thereto for conjoint rotation. A control knob is carried by the stem, and the stem has a radially-enlarged intermediate portion provided with a sealing ring engaging the housing.

These and other objects of the present invention will be apparent from a reading of the following specification, taken in conjunction with the enclosed drawings, in which :

FIGURE 1 is a perspective of a control module within which the improved combined pressure-reducing regulator and shut-off valve of the present invention may find more particular utility.

FIGURE 2 is a section view, taken across the lines 2-2 of Figure 1, and showing the combined pressure-reducing regulator and shut-off valve in its "neutral" position, wherein the pressurized air supply has not been applied.

FIGURE 3 corresponds to Figure 2, but shows the pressurized air being supplied, and further shows the valve in its regulating mode of operation.

FIGURE 4 also corresponds to Figure 2, but shows the valve manually moved into its fully closed position to shut off the high-pressure air inlet.

FIGURE 5 is a section view, taken across the lines 5-5 of Figure 3, and showing the washer carried by the end face of the piston.

FIGURE 6 is a stepped section view, taken along the lines 6-6 of Figure 3, and showing the low-pressure air outlet means.

FIGURE 7 is a section view, taken along the lines 7-7 of Figure 3, showing the high pressure air inlet means, and further showing a lateral passageway leading to a bypass valve.

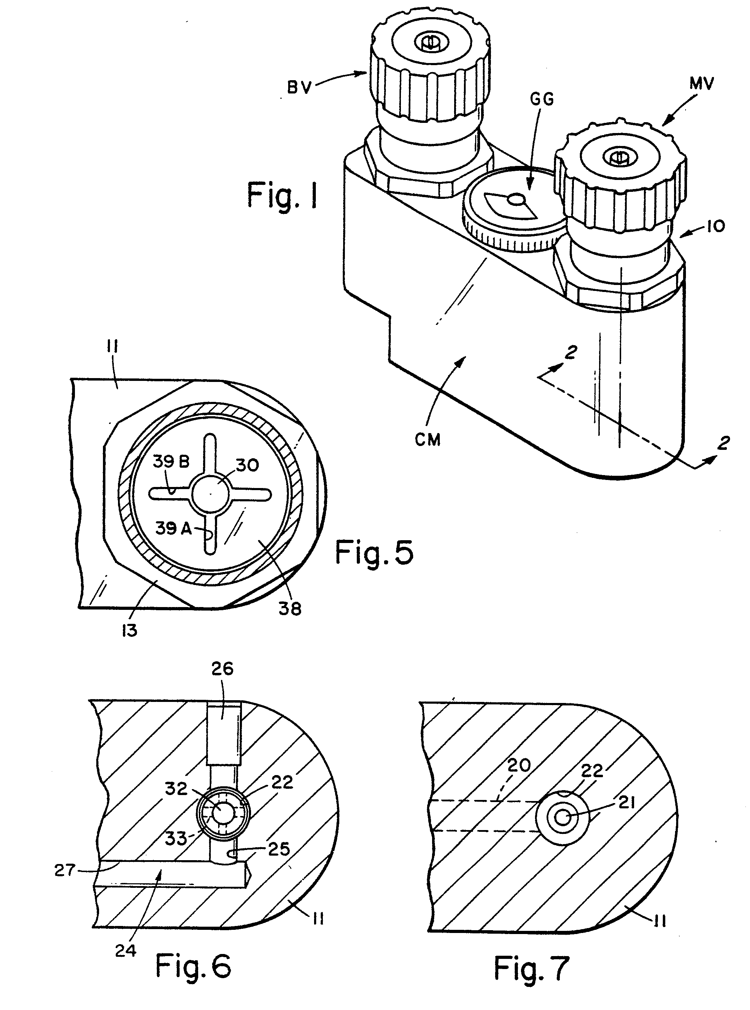

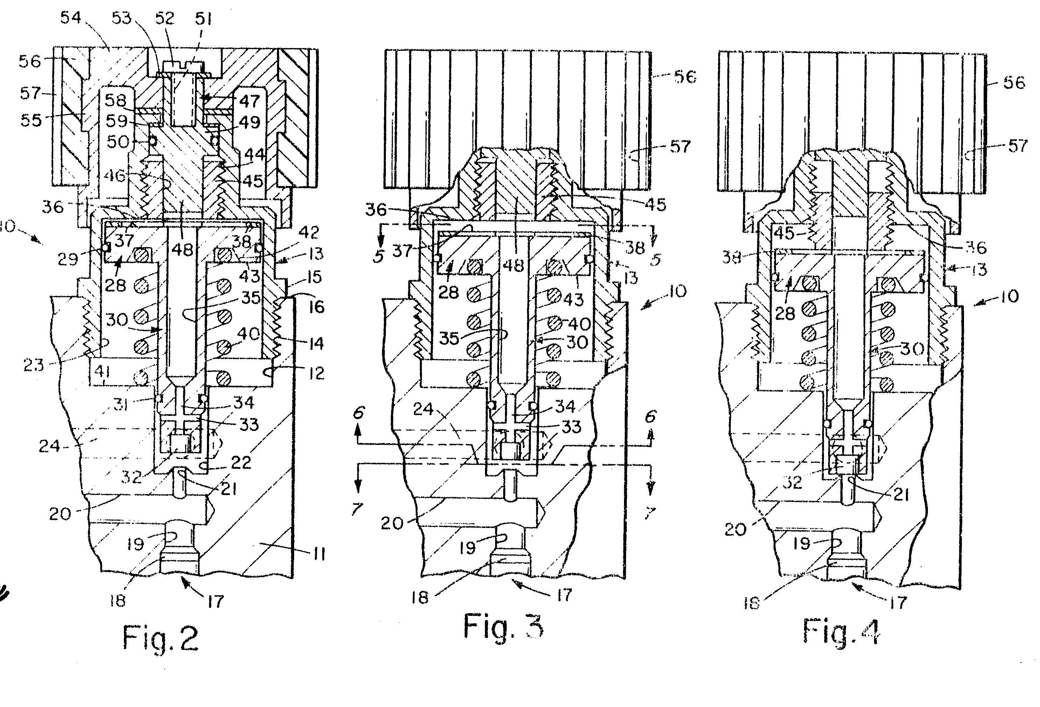

With reference to Figure 1, there is illustrated a control module CM having a main valve MV, a bypass valve BV, and a gas gauge GG indicating the level of the remaining pressurized air supply. The control module may be part of an overall breathing apparatus (not shown herein) and may be supported on the user's chest for convenient manipulation of the valves.

With reference to Figures 2-4, there is illustrated the combined pressure-reducing regulator and shut-off valve 10 of the present invention. This valve (and its associated control module CM) are intended for use with a self-contained breathing apparatus (or "SCBA"). However, it will be appreciated by those skilled in the art that the teachings of the present invention are not confined thereto, but rather, are equally applicable to other pneumatic or fluid systems.

With this in mind, the valve 10 includes a valve block or housing 11 having an opening 12. A generally-cylindrical substantially-tubular housing member 13 is secured within this opening by threads 14. This housing member projects above the housing and is provided with an annular shoulder 15 supported on the top surface 16 of the housing. The housing is provided with a high-pressure air inlet means 17 connected to an air cylinder; the air cylinder (not shown) may be carried on the user's back. A suitable filter 18 in the air inlet means leads to a vertical passageway 19. This vertical passageway communicates with a horizontal passageway 20, which leads to an indicator or gauge (GG in Figure 1) for providing a convenient visual indication of the remaining air supply in the cylinder. The horizontal passageway is also in communication with a port 21.

With reference again to Figures 2-4, and with further reference to Figures 5-7, the housing and housing member secured thereto are provided, respectively, with a bore 22 and a communicating counterbore 23. A low-pressure air outlet means 24 includes a cross port 25 in communication with the bore, as shown more clearly in Figure 6. This cross port may be conveniently formed by drilling into the housing, which is then sealed by a suitable plug 26. The cross port in turn communicates with an outlet passageway 27.

A piston 28 (constituting a movable regulating member) is slidably received in the counterbore and carries a sealing ring 29. The piston is integrally formed with (or otherwise secured to) a piston rod 30 slidably received in the bore in the housing. A sealing ring 31 is carried by the piston rod. The end of the piston rod carries a plug 32 for closing off the port 21 (as hereinafter described). Cross canals 33 and 34, respectively, are formed in the end of the piston rod. These canals communicate the end of the bore with an internal bore 35 formed in the tubular piston rod, thereby bleeding a portion of the regulated air (internally of the piston/piston rod subassembly) to the opposite end 36 of the counterbore. The end of the counterbore confronts an end face 37 of the piston.

A washer 38 is carried on the end face of the piston. This washer extends to the circumference of the piston and preferably, is provided with cross slots 39A and 39B, respectively. A coiled compression spring 40 is disposed within the counterbore, concentrically of the piston rod, and is seated axially between the inner end 41 of the counterbore and an internal annular groove 42 formed on the inner face 43 of the piston. As hereinafter explained, this spring constitutes a specially-selected precision component.

The upper portion of the housing member (above the piston) is internally threaded, as at 44, to receive an externally- threaded sleeve member 45 (constituting a screw-threaded adjusting member) having a square (or polygonal) cross-sectioned bore 46. A stem 47 has an integral depending tang portion 48 received within the bore and keyed thereto for conjoint rotation therewith. The stem also has a radially-enlarged intermediate portion 49 provided with a sealing ring 50. The upper portion of the stem is internally threaded, as at 51, for receiving a screw 52 provided with a washer 53. The screw and washer axially retain an inner knob member 54 which is keyed to the stem for conjoint rotation. This inner knob member, in turn, is keyed (as at 55) to an outer knob member 56. The subassembly of the members 54 and 56 provides a manual control knob (or manually-actuated member) for the valve. The outer member 56 is provided with external flutes 57 to facilitate a manual manipulation. A thrust bearing washer 58 is provided between the inner knob member and the end of the housing member, and a thrust bearing washer 59 is provided between the housing member and the radially-enlarged intermediate portion of the stem. The end of the tang has a relatively small cross-sectional area (in communication with the air supply) compared to the intermediate portion of the stem, and thus the relatively-large control knob (to which the stem is connected) is easier to turn down while under pressure.

In operation, the spring 40 exerts a constant force on the piston 28 and, as shown in the unpressurized position of Figure 2, moves the piston (upwardly) in its cylinder formed by the counterbore 23. When high pressure air is supplied via inlet 17, a portion of the air "bleeds" through the piston rod 30 and piston 28 and acts upon the end face 37 of the piston, as shown in Figure 3, to move the piston (downwardly) in its cylinder against the bias force of the spring 40. This is the regulatory operating "open" position of the valve. In this position, the screw-threaded sleeve 45 does not bear against the piston 28 (nor interfere with the bias force of the spring 40). However, when it is desired to shut off the air cylinder, the knob subassembly 54, 56 is rotated to rotate the stem 47 and hence the screw-threaded sleeve 45, thereby advancing the sleeve 45 axially within the housing member 13 and into the counterbore 23 for engagement with the end face 37 of the piston 28 as shown in Figure 4. Accordingly, the piston 28 and hence the piston rod 30 are advanced axially (against the bias force of the spring 40) until the plug 32 on the end of the piston rod closes off the port 21, thereby interrupting the supply from the high-pressure inlet means 17 to the low-pressure output means 24. This is the "closed" position of the valve.

An important feature of the present invention resides in the screw-threaded sleeve member 45 being disassociated with the spring 40 over the operating (regulatory) cycle of the pneumatic system. Since the spring is not affected by the screw-threaded member (to which the knob subassembly is coupled), the bias force exerted by the spring on the piston is substantially constant. By providing a precision spring, and by carefully selecting the surface area of the piston to be acted upon by the high pressure air, a precise degree of regulation may be provided for a particular pneumatic system. This regulation will be substantially unaffected by variations in the output supply pressure from the high-pressure air cylinder during the operating cycle of the equipment. No repeated adjustment of a control knob is necessary to maintain a desired output pressure, and the knob subassembly merely constitutes an on/off shut-off valve for closing the high-pressure supply. As a result, a considerable savings in size, weight and cost are realized, consonant with improved regulation.

CLAIMS

1. A combined pressure-reducing regulator and shut-off valve, comprising a housing (11) having a bore (22) and further having a communicating counterbore (23) of greater diameter formed therein, a piston (28) slidably received in the counterbore and having an end face (37) confronting the end (36) of the counterbore, the piston further having a piston rod (30) slidably received in the bore, the housing having high-pressure inlet means (17) and low-pressure outlet means (24), respectively, in communication with the bore, a spring (40) in the counterbore and seated axially between the piston and the housing, and passageway means (34) communicating the bore with the opposite end of the counterbore, whereby pressure on the end face of the piston counteracts the force of the spring to regulate the flow through the low-pressure outlet means, characterized by a movable member (45) mounted within the housing beyond the end of the counterbore and normally out of engagement with the end face of the piston, whereby the spring biases the piston independently of the movable member, and manual means (54, 56) for selectively moving the movable member into engagement with the end face of the piston and against the force of the spring, thereby advancing the piston and piston rod to close off the high-pressure inlet means.

2. A combined regulator and valve according to claim 1, characterized in that the movable member (45) comprises an axially-movable sleeve threadably received within the housing.

3. A combined regulator and valve according to claim 2, characterized in that the manual means (54, 56) for selectively moving the sleeve comprises a knob (56), a stem (47) mounted within the knob for conjoint rotation, means (49, 52) for rotatably mounting the knob and stem on the housing but precluding axial movement of the knob and stem relative thereto, and the stem having an integral tang portion (48) received within the sleeve and keyed thereto.

4. A combined regulator and valve according to claim 3, characterized in that the stem has a radially-enlarged intermediate portion (49) mounted within the housing, and in that a sealing ring (50) is carried by the intermediate portion.

5. A combined regulator and valve according to any of claims 1 to 4, characterized in that a washer (38) is carried on the end face of the piston, the washer having cross slots formed therein and extending substantially to the outer diameter of the piston.

0112765

Fig. I

BV  GG  MV

IO

CM

2

2

Fig.5

II

39 B  30

39 A

13  38

Fig.6

26

32  22

33

27  25

24

II

Fig.7

20  22

21

II

Fig. 2

Fig. 3

Fig. 4

0112765

**European Patent Office**

0112765

**EUROPEAN SEARCH REPORT**

Application number

EP 83 40 2428

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-2 085 306 (M.H. GLYNN) * Page 2, lines 3-4, 10-12, 22-24, 28-30, 39-44, 53-55; figure 2 * | 1-3,5 | F 16 K 31/363 G 05 D 16/10 A 62 B 9/02 |
| X | GB-A- 454 822 (SOGAZ) * Page 1, line 92 - page 2, line 6; figure 2 * | 1-3,5 | |
| Y | FR-A-2 332 036 (DRAGERWERK AG) * Page 3, line 38 - page 4, line 15 * | 1-4 | |
| Y | US-A-4 226 257 (TRINKWALDER) * Whole document * | 1-4 | |
| A | FR-A-1 548 799 (SUCHY) * Page 2, column 2; figure 1 * | 1 | TECHNICAL FIELDS SEARCHED (Int. Cl. 3) F 16 K G 05 D A 62 B |

The present search report has been drawn up for all claims

| Place of search THE HAGUE | Date of completion of the search 21-03-1984 | Examiner JUGUET J.M. |
|---|---|---|